# EUROPÄISCHE PATENTANMELDUNG

(11) **EP 4 650 900 A1**
(43) Veröffentlichungstag der Anmeldung: **19.11.2025**
(21) Anmeldenummer: 25171609.8
(22) Anmeldetag: 22.04.2025
(51) Int. Cl.: G05D 1/244, G05D 1/689

(54) **VERFAHREN ZUR STEUERUNG EINER FLUGROUTE EINES FLUGGERÄTS BEI EINEM ÜBERFLUG ÜBER EINE SPIEGELFLÄCHE**

(30) Priorität: 18.04.2024 DE 102024110930
(71) Anmelder: Deutsches Zentrum für Luft- und Raumfahrt e.V., 53227 Bonn (DE)
(72) Erfinder: Schnerring, Alexander, 51147 Köln (DE); Röger, Marc, 51147 Köln (DE); Krauth, Julian, 51147 Köln (DE)
(74) Vertreter: Dompatent

(57) **Zusammenfassung**

Verfahren zur Steuerung einer Flugroute eines steuerbaren Fluggeräts (7) bei einem Überflug über eine Spiegelfläche (5) eines Reflektors (3), vorzugsweise eines Reflektors (3) eines Heliostaten (1) eines Solarturmkraftwerks, mit folgenden Schritten:
a) Bereitstellen des steuerbaren Fluggeräts (7), das eine Kamera (9) aufweist, und eines stationären Markers (11) mit vorgegebener Position, der von der Spiegelfläche (5) des Reflektors (3) reflektiert wird,
b) Aufnahme eines Bildes der Spiegelfläche (5) des Reflektors (3) mittels der Kamera (9) an einer Position des steuerbaren Fluggeräts (7) oberhalb des Reflektors (3),
c) Auswerten des Bildes und Bestimmung eines Reflexes (13) des Markers (11) auf der Spiegelfläche (5) in dem Bild,
d) Abschätzen einer Position des Reflexes (13) des Markers (11) auf der Spiegelfläche (5), wobei über die abgeschätzte Position des Reflexes (13) des Markers (11) auf der Spiegelfläche (5) und die Position des steuerbaren Fluggeräts (7) ein Navigationsvektor (16), der von der abgeschätzten Position des Reflexes des Markers (11) auf der Spiegelfläche (5) hin zur Kamera (9) verläuft, abgeschätzt wird, und
e) Steuern des steuerbaren Fluggeräts (7) zu einer neuen Position des steuerbaren Fluggeräts (7) mittels Vorgabe eines Geschwindigkeitsvektors in Richtung zu der neuen Position, wobei der Geschwindigkeitsvektor orthogonal zu dem Navigationsvektor (16) verlaufende Geschwindigkeitsvektorkomponenten (20) aufweist, die in einer Navigationsebene (19) liegen, die orthogonal zu dem Navigationsvektor (16) verläuft oder mittels Vorgabe eines Wegpunktes an der neuen Position, wobei der vorgegebene Wegpunkt in einer Navigationsebene (19) liegt, die orthogonal zu dem Navigationsvektor (16) verläuft.

## Beschreibung

Die vorliegende Erfindung betrifft ein Verfahren zur Steuerung einer Flugroute eines Fluggeräts bei einem Überflug über eine Spiegelfläche, vorzugsweise über einen Heliostaten.

Heliostaten mit einer oder mehreren Spiegelfläche können beispielsweise Teil eines solarthermischen Turmkraftwerks sein. Für einen optimierten Betrieb eines derartigen solarthermischen Turmkraftwerks müssen Heliostaten kalibriert werden, um eine exakte Nachführung bzgl. der Sonne gewährleisten zu können. Unter Kalibrierung versteht man die Anpassung von Modellparametern an mehrere Kalibrierpunkte. Ein Kalibrierpunkt bezeichnet eine Messung der aktuellen Ist-Orientierung (Azimut, Elevation) des Normalenvektors auf eine Spiegelfläche eines Reflektors des Heliostaten gemeinsam mit der Soll-Orientierung. Daraus werden Korrekturwerte für eine konkrete Heliostatstellung ermittelt und abgespeichert. Diese können beispielsweise bei der Steuerung des Heliostaten verwendet werden. Für die Bestimmung von Kalibrierpunkten ist es bekannt, die Heliostaten mittels eines steuerbaren Fluggerätes zu überfliegen und Bilder der Heliostaten aufzunehmen und auszuwerten.

Aus DE 10 2021 133 719 A1 des Anmelders ist bekannt, eine Lichtquelle als einen Marker zu verwenden und dass ein Fluggerät entlang eines vorgegebenen Flugmusters bewegt wird, um eine Vielzahl von Aufnahmen der Heliostaten vorzunehmen. Aus den Aufnahmen werden anschließend mittels der in den Bildern enthaltenen Reflexionen des Markers auf den Heliostaten ein virtuelles Target bestimmt, wobei anschließend für jeden zu vermessenden Heliostaten ein Zielvektor anhand des Fokuspunktes auf dem virtuellen Target ermittelt wird.

Da eine Vielzahl von Bildern ausgewertet werden muss, um ein virtuelles Target zu bestimmen, werden die Bilder zumeist nachträglich ausgewertet, wobei das Verfahren vergleichsweise langwierig und aufwändig ist.

Eine vorgegebene Flugroute bzw. eine vorgegebenes Flugmuster, hat den Nachteil, dass eine große Anzahl von Bildern aufgenommen und ausgewertet werden müssen und kein Einfluss möglich ist bei Fällen, in denen eine Reflexion des Markers nicht oder unzureichend auf einem Bild erkennbar ist. Darüber hinaus werden längere Flugwege verursacht, was zu einer längeren Dauer des Verfahrens führt.

Ferner muss für eine Bestimmung einer akkuraten Steigungsfehler-Karte (Slope Deviation Map) oder eines gemittelten Normalenvektors eine ausreichende Informationsdichte von punktuellen Messwerten möglichst gleichmäßig verteilt über der Spiegelfläche vorliegen, was jedoch mittels einer vorgegeben Flugroute nicht ohne weiteres möglich ist, da eine Anpassung der Flugroute für die Aufnahme von Reflexen eines Markers an bestimmten Punkten auf der Spiegelfläche nicht möglich ist.

Es ist daher Aufgabe der vorliegenden Erfindung, ein verbessertes Verfahren zur Steuerung eines Fluggeräts bei einem Überflug über eine Spiegelfläche bereitzustellen, das insbesondere eine autonome Regelung der Flugroute ermöglicht.

Die der Erfindung zugrunde liegende Aufgabenstellung wird gelöst durch Verfahren gemäß den Ansprüchen 1, 2 oder 3.

Das erfindungsgemäße Verfahren zur Steuerung einer Flugroute eines steuerbaren Fluggeräts bei einem Überflug über eine Spiegelfläche eines Reflektors, vorzugsweise eines Reflektors eines Heliostaten eines Solarturmkraftwerks, sieht folgende Schritte vor:
a) Bereitstellen eines steuerbaren Fluggeräts, das eine Kamera aufweist, und eines stationären Markers mit vorgegebener Position, der von der Spiegelfläche des Reflektors reflektiert wird,
b) Aufnahme eines Bildes der Spiegelfläche des Reflektors mittels der Kamera an einer Position des steuerbaren Fluggeräts oberhalb des Reflektors,
c) Auswerten des Bildes und Bestimmung eines Reflexes des Markers auf der Spiegelfläche in dem Bild,
d) Abschätzen einer Position des Reflexes des Markers auf der Spiegelfläche, wobei über die abgeschätzte Position des Reflexes des Markers auf der Spiegelfläche und die Position des steuerbaren Fluggeräts ein Navigationsvektor, der von der abgeschätzten Position des Reflexes des Markers auf der Spiegelfläche hin zur Kamera verläuft, abgeschätzt wird, und
e) Steuern des steuerbaren Fluggeräts zu einer neuen Position des steuerbaren Fluggeräts mittels Vorgabe eines Geschwindigkeitsvektors in Richtung zu der neuen Position, wobei der Geschwindigkeitsvektor orthogonal zu dem Navigationsvektor verlaufende Geschwindigkeitsvektorkomponenten aufweist, die in einer Navigationsebene liegen, die orthogonal zu dem Navigationsvektor verläuft oder mittels Vorgabe eines Wegpunktes an der neuen Position, wobei der vorgegebene Wegpunkt in einer Navigationsebene liegt, die orthogonal zu dem Navigationsvektor verläuft oder in Bezug auf die Navigationsebene vorgegeben wird.

Die Position des steuerbaren Fluggeräts kann beispielsweise über die Steuerung des Fluggeräts oder über einen oder mehrere Sensoren, wie beispielswiese über einen GPS-Sensor, ermittelt werden. Die Position des steuerbaren Fluggeräts kann beispielsweise dem Schwerpunkt des Fluggeräts oder der Position eines Sensors entsprechen.

Da die Position der Kamera an dem steuerbaren Fluggerät bekannt oder ermittelbar ist, kann in Schritt d) die Position des steuerbaren Fluggeräts, verwendet werden und aus dieser die Position der Kamera berechnet werden. Bei großen Entfernungen von einer Spiegelfläche, wie beispielsweise 10 m und mehr, ist der Abstand der Kamera von der ermittelten Position des Fluggeräts, der im Zentimeterbereich liegt, vernachlässigbar klein, so dass auch die Position des steuerbaren Fluggeräts ohne Umrechnung verwendet werden kann.

Die orthogonal zu dem Navigationsvektor verlaufenden Geschwindigkeitsvektorkomponenten in Schritt e) bewirken, dass der von der Kamera beobachtete Reflex des Markers auf der Spiegelfläche "wandert", so dass der Reflex beispielsweise in Richtung auf einen gewünschten Punkt auf der Spiegelfläche bewegt werden kann. Dadurch kann auch eine Art Abscannen der Spiegelfläche durchgeführt werden, wodurch, mit weiteren Berechnungen bzw. Auswertungen der Bilder eine Bestimmung einer Steigungsfehler-Karte erfolgen kann. Bei dem Steuern des steuerbaren Fluggeräts mittels Vorgabe eines Geschwindigkeitsvektors muss die neue Position des Fluggeräts nicht notwendigerweise eine vorgegebene Position sein. Die neue Position des Fluggeräts kann sich auch durch eine vorgegebene Zeit ergeben, d.h. dass die neue Position diejenige ist, an der bei einem Flug entlang des Geschwindigkeitsvektors sich das Fluggerät nach der vorgegebenen Zeit befindet.

Mittels des Geschwindigkeitsvektor mit orthogonal zu dem Navigationsvektor verlaufenden Geschwindigkeitsvektorkomponenten, die in der Navigationsebene liegen oder dem vorgegebenen Wegpunkt, der in der Navigationsebene liegt, kann eine Steuerung des Fluggeräts auf einfache Art und Weise erfolgen, da die Vorgaben für die Steuerung in einer für das Fluggerät auf einfache Art und Weise umsetzbarer Form vorliegen.

Die Navigationsebene kann insbesondere durch einen Punkt des Fluggeräts, beispielsweise den die zuvor beschriebene Position des Fluggeräts entsprechenden Punkt, verlaufen. Sofern der Wegpunkt keine Änderung der Entfernung des Fluggeräts von der Spiegelfläche beinhaltet, liegt der Wegpunkt in der Navigationsebene. Bei einer Flugroute, die eine Änderung der Entfernung des Fluggeräts von der Spiegelfläche vorsieht, wird der Wegpunkt in Bezug auf die Navigationsebene vorgegeben, beispielsweise in einer zu der Navigationsebene parallelen Ebene.

In einer zweiten Variante sieht das erfindungsgemäße Verfahren zur Steuerung einer Flugroute eines steuerbaren Fluggeräts bei einem Überflug über eine Spiegelfläche eines Reflektors, vorzugsweise eines Reflektors eines Heliostaten eines Solarturmkraftwerks, folgende Schritte vor:
a) Bereitstellen eines steuerbaren Fluggeräts, das einen Marker aufweist, und einer stationären Kamera mit vorgegebener Position, die auf die Spiegelfläche des Reflektors gerichtet ist,
b) Aufnahme eines Bildes der Spiegelfläche des Reflektors mittels der Kamera, wobei das steuerbare Fluggerät an einer Position oberhalb des Reflektors angeordnet ist,
c) Auswerten des Bildes und Bestimmung eines Reflexes des Markers auf der Spiegelfläche in dem Bild,
d) Abschätzen einer Position des Reflexes des Markers auf der Spiegelfläche, wobei über die abgeschätzte Position des Reflexes des Markers auf der Spiegelfläche und die Position des steuerbaren Fluggeräts ein Navigationsvektor, der von der abgeschätzten Position des Reflexes des Markers auf der Spiegelfläche hin zu dem Marker verläuft, abgeschätzt wird, und
e) Steuern des steuerbaren Fluggeräts zu einer neuen Position des steuerbaren Fluggeräts mittels Vorgabe eines Geschwindigkeitsvektors in Richtung zu der neuen Position, wobei der Geschwindigkeitsvektor orthogonal zu dem Navigationsvektor verlaufende Geschwindigkeitsvektorkomponenten aufweist, die in einer Navigationsebene liegen, die orthogonal zu dem Navigationsvektor verläuft oder mittels Vorgabe eines Wegpunktes an der neuen Position, wobei der vorgegebene Wegpunkt in einer Navigationsebene liegt, die orthogonal zu dem Navigationsvektor verläuft, oder in Bezug auf die Navigationsebene vorgegeben wird.

Die Position des steuerbaren Fluggeräts kann beispielsweise über die Steuerung des Fluggeräts oder über einen oder mehrere Sensoren, wie beispielswiese über einen GPS-Sensor, ermittelt werden. Die Position des steuerbaren Fluggeräts kann beispielsweise dem Schwerpunkt des Fluggeräts oder der Position eines Sensors entsprechen.

Da die Position der Markers an dem steuerbaren Fluggerät bekannt oder ermittelbar ist, kann in Schritt d) die Position des steuerbaren Fluggeräts, verwendet werden und aus dieser die Position der Markers berechnet werden. Bei großen Entfernungen von einer Spiegelfläche, wie beispielsweise 10 m und mehr, ist der Abstand der Markers von der ermittelten Position des Fluggeräts, der im Zentimeterbereich liegt, vernachlässigbar klein, so dass auch die Position des steuerbaren Fluggeräts ohne Umrechnung verwendet werden kann.

Die orthogonal zu dem Navigationsvektor verlaufenden Geschwindigkeitsvektorkomponenten in Schritt e) bewirken, dass der von der Kamera beobachtete Reflex des Markers auf der Spiegelfläche "wandert", so dass der Reflex beispielsweise in Richtung eines gewünschten Punkts auf der Spiegelfläche bewegt werden kann. Dadurch kann auch eine Art Abscannen der Spiegelfläche durchgeführt werden, wodurch, mit weiteren Berechnungen bzw. Auswertungen der Bilder eine Bestimmung einer Steigungsfehler-Karte erfolgen kann. Bei dem Steuern des steuerbaren Fluggeräts mittels Vorgabe eines Geschwindigkeitsvektors muss die neue Position des Fluggeräts nicht notwendigerweise eine vorgegebene Position sein. Die neue Position des Fluggeräts kann sich auch durch eine vorgegebene Zeit ergeben, d.h. dass die neue Position diejenige ist, an der bei einem Flug entlang des Geschwindigkeitsvektors sich das Fluggerät nach der vorgegebenen Zeit befindet.

Mittels des Geschwindigkeitsvektor mit orthogonal zu dem Navigationsvektor verlaufenden Geschwindigkeitsvektorkomponenten, die in der Navigationsebene liegen oder dem vorgegebenen Wegpunkt, der in der Navigationsebene liegt, kann eine Steuerung des Fluggeräts auf einfache Art und Weise erfolgen, da die Vorgaben für die Steuerung in einer für das Fluggerät auf einfache Art und Weise umsetzbarer Form vorliegen.

Die Navigationsebene kann insbesondere durch einen Punkt des Fluggeräts, beispielsweise den die zuvor beschriebene Position des Fluggeräts entsprechenden Punkt, verlaufen. Sofern der Wegpunkt keine Änderung der Entfernung des Fluggeräts von der Spiegelfläche beinhaltet, liegt der Wegpunkt in der Navigationsebene. Bei einer Flugroute, die eine Änderung der Entfernung des Fluggeräts von der Spiegelfläche vorsieht, wird der Wegpunkt in Bezug auf die Navigationsebene vorgegeben, beispielsweise in einer zu der Navigationsebene parallelen Ebene.

In einer dritten Variante sieht das erfindungsgemäße Verfahren zur Steuerung einer Flugroute eines steuerbaren Fluggeräts bei einem Überflug über eine Spiegelfläche eines Reflektors, vorzugsweise eines Reflektors eines Heliostaten eines Solarturmkraftwerks, folgende Schritte vor:
a) Bereitstellen eines steuerbaren Fluggeräts, das eine Kamera und einen Marker aufweist, wobei der Marker und die Kamera jeweils mit einer vorgegebenen Position an dem steuerbaren Fluggerät angeordnet sind,
b) Aufnahme eines Bildes der Spiegelfläche des Reflektors mittels der Kamera an einer Position des steuerbaren Fluggeräts oberhalb des Reflektors,
c) Auswerten des Bildes und Bestimmung eines Reflexes des Markers auf der Spiegelfläche in dem Bild,
d) Abschätzen einer Position des Reflexes des Markers auf der Spiegelfläche, wobei über die Position des Reflexes des Markers auf der Spiegelfläche und die Position des steuerbaren Fluggeräts ein Navigationsvektor, der von der abgeschätzten Position des Reflexes des Markers auf der Spiegelfläche hin zu einem vorgegebenen Punkt an dem Fluggerät verläuft, abgeschätzt wird, und
e) Steuern des steuerbaren Fluggeräts zu einer neuen Position des steuerbaren Fluggeräts mittels Vorgabe eines Geschwindigkeitsvektors in Richtung zu der neuen Position, wobei der Geschwindigkeitsvektor orthogonal zu dem Navigationsvektor verlaufende Geschwindigkeitsvektorkomponenten aufweist, die in einer Navigationsebene liegen, die orthogonal zu dem Navigationsvektor verläuft oder mittels Vorgabe eines Wegpunktes an der neuen Position, wobei der vorgegebene Wegpunkt in einer Navigationsebene liegt, die orthogonal zu dem Navigationsvektor verläuft, oder in Bezug auf die Navigationsebene vorgegeben wird.

Die Position des steuerbaren Fluggeräts kann beispielsweise über die Steuerung des Fluggeräts oder über einen oder mehrere Sensoren, wie beispielswiese über einen GPS-Sensor, ermittelt werden. Die Position des steuerbaren Fluggeräts kann beispielsweise dem Schwerpunkt des Fluggeräts oder der Position eines Sensors entsprechen.

Da die Position des Markers und die Position der Kamera an dem steuerbaren Fluggerät bekannt oder ermittelbar sind, kann in Schritt d) die Position des steuerbaren Fluggeräts verwendet werden und aus dieser die Position des Markers bzw. der Kamera berechnet werden. Bei großen Entfernungen von einer Spiegelfläche, wie beispielsweise 10 m und mehr, ist der Abstand der Kamera bzw. des Markers von der ermittelten Position des Fluggeräts, der im Zentimeterbereich liegt, vernachlässigbar klein, so dass auch die Position des steuerbaren Fluggeräts ohne Umrechnung als vorgegebener Punkt verwendet werden kann.

Die vorgegebenen Positionen des Markers und der Kamera an dem steuerbaren Fluggerät müssen nicht notwendigerweise fest sein. Es ist auch möglich, dass beispielsweise die Position der Kamera durch eine Verstellung veränderbar ist. Für das Verfahren ist lediglich notwendig, dass die Positionen des Markers und der Kamera bekannt sind oder ermittelt werden können.

Der Navigationsvektor kann beispielsweise von der abgeschätzten Position des Reflexes des Markers auf der Spiegelfläche hin zu einem Punkt, der sich mittig zwischen Kamera und Marker befindet, verlaufen. In diesem Fall entspricht der Navigationsvektor dem Normalenvektor der Spiegelfläche.

Die orthogonal zu dem Navigationsvektor verlaufenden Geschwindigkeitsvektorkomponenten in Schritt e) bewirken, dass der von der Kamera beobachtete Reflex des Markers auf der Spiegelfläche "wandert", so dass der Reflex beispielsweise in Richtung auf einen gewünschten Punkt auf der Spiegelfläche bewegt werden kann. Dadurch kann auch eine Art Abscannen der Spiegelfläche durchgeführt werden, wodurch, mit weiteren Berechnungen bzw. Auswertungen der Bilder eine Bestimmung einer Steigungsfehler-Karte erfolgen kann. Bei dem Steuern des steuerbaren Fluggeräts mittels Vorgabe eines Geschwindigkeitsvektors muss die neue Position des Fluggeräts nicht notwendigerweise eine vorgegebene Position sein. Die neue Position des Fluggeräts kann sich auch durch eine vorgegebene Zeit ergeben, d.h. dass die neue Position diejenige ist, an der bei einem Flug entlang des Geschwindigkeitsvektors sich das Fluggerät nach der vorgegebenen Zeit befindet.

Mittels des Geschwindigkeitsvektors mit orthogonal zu dem Navigationsvektor verlaufenden Geschwindigkeitsvektorkomponenten, die in der Navigationsebene liegen oder dem vorgegebenen Wegpunkt, der in der Navigationsebene liegt, kann eine Steuerung des Fluggeräts auf einfache Art und Weise erfolgen, da die Vorgaben für die Steuerung in einer für das Fluggerät auf einfache Art und Weise umsetzbarer Form vorliegen.

Die Navigationsebene kann insbesondere durch einen Punkt des Fluggeräts, beispielsweise den die zuvor beschriebene Position des Fluggeräts entsprechenden Punkt, verlaufen. Sofern der Wegpunkt keine Änderung der Entfernung des Fluggeräts von der Spiegelfläche beinhaltet, liegt der Wegpunkt in der Navigationsebene. Bei einer Flugroute, die eine Änderung der Entfernung des Fluggeräts von der Spiegelfläche vorsieht, wird der Wegpunkt in Bezug auf die Navigationsebene vorgegeben, beispielsweise in einer zu der Navigationsebene parallelen Ebene.

Die unterschiedlichen Varianten der erfindungsgemäßen Verfahren unterscheiden sich darin, dass bei der ersten Variante die Kamera an dem steuerbaren Fluggerät befestigt und somit instationär ist, wohingegen der Marker stationär, beispielsweise an einem Turm eines Solarturmkraftwerks, angeordnet ist. Bei der zweiten Variante ist der Marker instationär an dem steuerbaren Fluggerät angeordnet, wohingegen die Kamera stationär, beispielsweise an dem Turm eines Solarturmkraftwerks angeordnet ist.

Die dritte Variante sieht vor, dass sowohl der Marker als auch die Kamera an dem steuerbaren Fluggerät angeordnet sind.

Der Reflektor kann Teil eines Heliostaten sein und mindestens eine Spiegelfläche aufweisen.

Vorzugsweise ist dabei vorgesehen, dass folgende Schritte bei den Erfindungsgemäßen Verfahren durchgeführt werden:
f) Aufnahme eines Bildes der Spiegelfläche des Reflektors mittels der Kamera an der neuen Position des steuerbaren Fluggeräts,
g) Wiederholen der Schritte c) bis f) bis zum Erreichen eines Abbruchkriteriums.

Ein Abbruch in Schritt g) bei Erreichen eines Abbruchkriteriums muss nicht notwendigerweise erst erfolgen, wenn eine Wiederholung gemäß Schritt g) vollständig ausgeführt ist, sondern kann auch bereits nach Durchführung des Schritts c), d) oder e) in einer Wiederholung erfolgen.

Durch die Aufnahme eines Bildes der Spiegelfläche des Reflektors mittels der Kamera an der neuen Position des steuerbaren Fluggeräts und die Wiederholung der Schritte c) bis f) kann festgestellt werden, an welcher Position sich der Reflex des Markers befindet, wenn sich das steuerbare Fluggerät an der neuen Position befindet. Dadurch erfolgt eine Rückmeldung, wodurch eine Regelung der Flugroute des steuerbaren Fluggeräts erfolgen kann. So kann der Reflex autonom zu einem gewünschten Punkt auf der Spiegelfläche geführt werden. Ein gewünschter Punkt kann beispielsweise ein Punkt auf der Spiegelfläche sein, für den eine Vermessung zur Erstellung einer Steigungsfehler-Karte oder eines Kalibrierpunkts erfolgen soll.

Bei dem Steuern des steuerbaren Fluggeräts in Schritt e) über den Geschwindigkeitsvektor kann sich die neue Position des Fluggeräts auch durch die Abtastrate der Kamera ergeben, d.h. dass die neue Position diejenige ist, an der bei einem Flug mit dem vorgegebenen Geschwindigkeitsvektor die Kamera das nächste Bild aufnimmt.

Die erfindungsgemäßen Verfahren sind insbesondere für die Vermessung einer Spiegelfläche eines Reflektors geeignet. Beispielsweise kann bei der ersten Variante, bei der die Kamera an dem Fluggerät angeordnet ist, aus der Position des steuerbaren Fluggeräts, der Position des Markers sowie der abgeschätzten Position des Reflexes auf der Spiegelfläche ein Normalenvektor der Spiegelfläche für die Position des Reflexes abgeschätzt werden, mittels dem zum Beispiel ein Kalibrierpunkt für den Reflektor bestimmbar ist. Bei der zweiten Variante, bei der der Marker an dem Fluggerät angeordnet ist, kann der Normalenvektor aus der Position des steuerbaren Fluggeräts, der Position der Kamera sowie der abgeschätzten Position des Reflexes auf der Spiegelfläche abgeschätzt werden. Bei der dritten Variante, bei der die Kamera und der Marker an dem Fluggerät angeordnet sind, kann der Normalenvektor aus der Position des steuerbaren Fluggeräts und dem vorgegebenen Punkt an dem Fluggerät sowie der abgeschätzten Position des Reflexes auf der Spiegelfläche oder aus dem Navigationsvektor abgeschätzt werden. Die erfindungsgemäßen Verfahren ermöglichen nun, dass in vorteilhafter Weise der Reflex auf der Spiegelfläche in Richtung zu einer gewünschten Position auf der Spiegelfläche bzw. auf die gewünschte Position verschoben werden kann, in dem der Geschwindigkeitsvektor oder der Wegpunkt entsprechend vorgegeben wird.

Bei dem erfindungsgemäßen Verfahren gemäß der ersten Variante wird zunächst das steuerbare Fluggerät an einer Position oberhalb des Reflektors positioniert und mittels der Kamera ein Bild der Spiegelfläche des Reflektors aufgenommen. Das Bild wird ausgewertet und der Reflex des Markers auf der Spiegelfläche in dem Bild bestimmt. Anschließend wird die Position des Reflexes des Markers auf der Spiegelfläche abgeschätzt und anhand der Position dieses Reflexes und, der Position des steuerbaren Fluggeräts der Navigationsvektor abgeschätzt.

Mit dem abgeschätzten Navigationsvektor wird nun das Fluggerät mittels Vorgabe eines Geschwindigkeitsvektors oder eines Wegpunktes gesteuert.

An einer sich nun ergebenden neuen Position kann ein weiteres Bild aufgenommen werden, mittel dem die Position des Reflexes auf der Spiegelfläche überprüft werden kann.

Diese Schritte werden nun wiederholt bis zu einem vorgegebenen Abbruchkriterium, beispielsweise einer vorgegebenen Position des Reflexes auf der Spiegelfläche.

In gleicher Weise ermöglicht auch die zweite Variante des erfindungsgemäßen Verfahrens, bei dem die Kamera stationär ist und der Marker mit dem steuerbaren Fluggerät bewegt wird, eine vorteilhafte Steuerung des Fluggeräts.

Bei der dritten Variante werden Kamera und Marker zusammen mit dem steuerbaren Fluggerät bewegt. Diese Variante hat den besonderen Vorteil, dass keine zusätzlichen Apparaturen in dem Umfeld des Reflektors installiert werden müssen.

Die während der erfindungsgemäßen Verfahren aufgenommenen Daten können beispielsweise an eine externe Recheneinheit übertragen werden, die die Bildauswertung übernimmt und die Steuerungsdaten für die Steuerung des steuerbaren Fluggeräts gemäß Schritt e) ermittelt und an das steuerbare Fluggerät übermittelt. Die externe Recheneinheit kann beispielsweise mobil sein und als separates mobiles Gerät ausgebildet sein. Grundsätzlich kann die Recheneinheit auch an dem steuerbaren Fluggerät angeordnet sein.

Vorzugsweise ist bei den erfindungsgemäßen Verfahren vorgesehen, dass, wenn die Auswertung des Bildes in Schritt c) ergibt, dass kein Reflex des Markers in dem Bild erkennbar ist, das steuerbare Fluggerät entlang eines vorgegebenen Flugmusters gesteuert wird mit gleichzeitiger Aufnahme von Bildern mit der Kamera und Auswertung der Bilder, bis ein Reflex des Markers in einem Bild bestimmt wird, wobei vorzugsweise dann in Schritt d) dieses Bild verwendet wird. Mit anderen Worten: Wenn in Schritt c) festgestellt wird, dass kein Reflex des Markers in dem aufgenommenen Bild erkennbar ist, wird eine Suchfunktion durchgeführt, wobei das Fluggerät entlang eines vorgegebenen Flugmusters fliegt und gleichzeitig Bilder aufgenommen werden. Die Bilder werden vergleichbar mit Schritt c) ausgewertet und es wird bestimmt, ob ein Reflex des Markers in einem Bild erkennbar ist. Sobald in einem Bild ein Reflex des Markers erkennbar ist, wird die Suchfunktion abgebrochen und das Verfahren wird mit Schritt d) fortgesetzt, wobei in Schritt d) das Bild, bei dem dann der Reflex des Markers in dem Bild erkennbar war, verwendet wird. Das Flugmuster kann eine Annäherung des Fluggeräts an den Reflektor umfassen.

Das Annähern hat den Vorteil, dass, wenn sich beispielsweise die Kamera und/oder der Marker sehr nah an der Spiegelfläche des Reflektors beispielsweise eines Heliostaten befindet bzw. befinden, beispielsweise in einem Abstand von etwa 5-10 m, der durch die Spiegelfläche sichtbare Raumwinkel sehr groß ist, sodass der Reflex des Markers leicht gefunden werden kann.

Das vorgegebene Flugmuster kann anhand einer vorangegangenen Position oder mehrerer vorangegangener Positionen oder einer vorangegangenen Flugbahn des steuerbaren Fluggeräts erstellt werden. Im einfachsten Fall fliegt das Fluggerät zur letzten Position des steuerbaren Fluggeräts, von welcher aus ein Bild aufgenommen wurde, in dem ein Reflex des Markers auf der Spiegelfläche erkennbar war. Das vorgegebene Flugmuster kann auch anhand einer vorangegangenen abgeschätzten Position des Reflexes des Markers auf der Spiegelfläche oder mehrerer vorangegangenen abgeschätzten Positionen des Reflexes des Markers auf der Spiegelfläche erstellt werden.

Gegebenenfalls kann vorgesehen sein, dass der Geschwindigkeitsvektor angepasst wird, um zu verhindern, dass der Reflex des Markers auf der Spiegelfläche erneut verloren wird.

Vorzugsweise ist bei den erfindungsgemäßen Verfahren vorgesehen, dass nach Schritt a) und vor Schritt b) das steuerbare Fluggerät an einer zuvor bestimmten Startposition als Position für Schritt b) positioniert wird. Es kann somit eine Startposition des steuerbaren Fluggeräts festgelegt werden, von der aus der Schritt b) beginnt. Die Startposition kann beispielsweise eine Position sein, bei der abgeschätzt wird, dass bei einer anschließenden Aufnahme des Bildes in Schritt b) und einer Auswertung des Bildes in Schritt c) mit hoher Wahrscheinlichkeit erkannt wird, dass ein Reflex des Markers in dem Bild ist.

Vorzugswiese ist vorgesehen, dass ein Mittelpunkt der Spiegelfläche abgeschätzt wird oder ein anderer auf der Spiegelfläche vorgegeben wird, wobei die Lage des Reflexes des Markers auf der Spiegelfläche zu dem abgeschätzten Mittelpunkt oder dem vorgegebenen Punkt ermittelt wird und bei der Vorgabe des Geschwindigkeitsvektors oder des Wegpunktes berücksichtigt wird. Bei einem Reflektor mit mehreren Spiegelflächen kann auch der Mittelpunkt des Reflektors abgeschätzt bzw. vorgegeben und verwendet werden. Mit anderen Worten: Bei der Ermittlung des Geschwindigkeitsvektors können die Geschwindigkeitsvektorkomponenten oder der Wegpunkt so gelegt werden, dass der von der Kamera beobachtete Reflex des Markers auf der Spiegelfläche in Richtung zu dem Mittelpunkt der Spiegelfläche oder des Reflektors oder einem anderen Punkt "wandert" bzw. in dessen Nähe verbleibt.

Für eine Ermittlung des Geschwindigkeitsvektors oder für eine Bestimmung des vorzugebenden Wegpunktes kann beispielsweise eine relative Position des Reflexes des Markers auf der Spiegelfläche zu dem Mittelpunkt der Spiegelfläche oder des Reflektors oder zu einem anderen Punkt in dem aufgenommenen Bild in Pixeln als Pixelabstand (Abstand in Pixeln in dem Bild) bestimmt werden.

Da beispielsweise ein Abstand des Reflexes des Markers auf der Spiegelfläche zu einem Mittelpunkt oder einem anderen Punkt in Pixeln in Abhängigkeit von der Größe des Bildausschnitts und somit in Abhängigkeit von der Entfernung des Fluggeräts variiert, kann der Pixelabstand normiert werden. Für die Normierung des Pixelabstands kann beispielsweise eine Struktur bekannter Länge in dem Bild bestimmt werden, die Pixelanzahl der Länge der Struktur bestimmt werden und die bestimmte Pixelanzahl für die Normierung des Pixelabstands verwendet werden. Dadurch wird ein von der Auflösung des Bildes unabhängiger Abstand ermittelt.

Anhand der Lage des Reflexes des Markers auf der Spiegelfläche zu dem abgeschätzten Mittelpunkt oder dem vorgegebenen Punkt werden die in der Navigationsebene liegenden Komponenten des Geschwindigkeitsvektors bzw. des Wegpunktes bestimmt.

Je nach gewünschter Aufgabe kann der Geschwindigkeitsvektor oder der Wegpunkt so ermittelt bzw. vorgegeben werden, dass der Reflex zu dem Mittelpunkt oder einem anderen vorgegebene Punkt "wandert". Für ein Abscannen der Spiegelfläche können verschiedene Punkte auf der Spiegelfläche vorgegeben werden, wobei nacheinander der Reflex zu den Punkten gelenkt wird.

Als Struktur bekannter Länge kann beispielsweise ein Außenrand der Spiegelfläche oder des Reflektors verwendet werden.

Vorzugsweise ist vorgesehen, dass, wenn in Schritt c) in dem Bild mehrere Reflexe des Markers auf der Spiegelfläche des Reflektors oder auf mehreren Spiegelflächen des Reflektors bestimmt werden, in Schritt d) die Positionen der mehreren Reflexe des Markers abgeschätzt werden und eine Zusammenfassung der abgeschätzten Positionen der mehreren Reflexe des Markers erfolgt, vorzugsweise eine Mittelung der abgeschätzten Positionen, wobei anschließend für die Abschätzung des Navigationsvektors der Spiegelfläche die zusammengefasste Position als Position des Reflexes des Markers verwendet wird.

Da aus der Position des Reflexes auf der Spiegelfläche der Navigationsvektor abgeschätzt wird und der abgeschätzte Navigationsvektor bei der Steuerung des steuerbaren Fluggeräts berücksichtigt wird, hat die Mittelung den Vorteil, dass lediglich ein Signal für die weiteren Schritte verwendet wird. Die Mittelung kann beispielsweise als arithmetische Mittelung der abgeschätzten Positionen der mehreren Reflexe des Markers erfolgen.

Beispielsweise bei Reflektoren mit mehreren Spiegelflächen, wie beispielswiese bei Heliostaten, sind die Spiegelflächen häufig leicht zueinander angestellt, um eine Konzentration der Strahlung zu erreichen. Dadurch kann auf den verschiedenen Spiegelflächen gleichzeitig jeweils ein Reflex sichtbar sein. Durch die Mittelung der abgeschätzten Position dieser Reflexe wird somit eine in Bezug auf den gesamten Reflektor abgeschätzte Position als Startpunkt für den Navigationsvektor abgeschätzt. Wenn ein bestimmter Punkt auf der Spiegelfläche oder in Bezug auf den Reflektor angesteuert werden soll, kann auch vorgesehen sein, dass die zusammengefasste, z.B. gemittelte, Position des Reflexes zu diesem Punkt bewegt werden soll.

Der Marker kann beispielsweise ein Gegenstand mit einem Muster oder einer charakteristischen Form sein. Besonders bevorzugt weist der Marker eine oder mehrere Lichtquellen auf.

Die erfindungsgemäßen Verfahren können nachts oder zu einem Zeitpunkt mit geringer Sonnenstrahlung durchgeführt werden, da dann die Reflexe des Markers in vorteilhafter Weise auf der Spiegelfläche erkennbar sind, ohne dass diese durch Reflexe der Sonne beeinträchtigt werden könnten. Um sicherzustellen, dass die Position des Reflexes auf der Spiegelfläche in vorteilhafter Weise bestimmt werden kann, kann bei geringen Lichtverhältnissen oder nachts auch vorgesehen sein, dass die Spiegelfläche beleuchtet wird oder zumindest an Ecken der Spiegelfläche leuchtende Markierungen angeordnet sind, um die Spiegelfläche in dem Bild zu erkennen.

Die erfindungsgemäßen Verfahren kann beispielsweise auch während des Betriebs eines Kraftwerks, dessen Teil der Reflektor ist, durchgeführt werden.

Bei den Varianten, bei denen die Kamera an dem Fluggerät angeordnet ist, kann die Kamera verschwenkbar an dem Fluggerät befestigt sein. Dabei kann vorgesehen sein, dass die Kamera anhand des Navigationsvektors ausgerichtet wird, d.h., dass die optische Achse der Kamera dem Navigationsvektor entspricht. Dadurch wird sichergestellt, dass der Reflex und die aufgenommene Spiegelfläche sich im Bereich der Bildmitte befinden.

Für eine genaue Berechnung des Navigationsvektors wird eine genaue Position des Reflexes des Markers auf der Spiegelfläche benötigt, d.h. eine genaue Position des Reflexes im Raum. Dies erfordert neben der Position des Reflexes im Bild auch Kenntnis über die Orientierung der Spiegelfläche: Eine Rotation der Spiegelfläche sorgt aufgrund des Hebels für eine Translation der Position des Reflexes. Problematisch ist, dass die Orientierung der Spiegelfläche nicht immer genau bekannt oder bestimmbar ist, wodurch auch die genaue Position des Reflexes nicht bekannt ist. Daher wird gemäß den erfindungsgemäßen Verfahren die Position des Reflexes auf der Spiegelfläche bzw. im Raum abgeschätzt. Die Abschätzung kann auf verschiedene Weisen erfolgen:
Beispielsweise kann als Näherung der Position des Reflexes ein bekannter Punkt verwendet werden, beispielsweise der Schnittpunkt der Rotationsachsen eines Reflektors, der zumeist der Mittelpunkt des Reflektors ist, oder ein anderer Punkt, der nah genug an der Position des Reflexes liegt. Im Bild kann beispielsweise über einen Pixelabstand oder einen normierten Pixelabstand bestimmt werden, ob der Position des Reflexes ausreichend nah an dem bekannten Punkt liegt, um diesen als Näherung der Position des Reflexes bei der Abschätzung zu verwenden.

Auch besteht die Möglichkeit eine Schätzung der Orientierung der Spiegelfläche vorzunehmen, die auch initial sein kann. Beispielsweise kann die Orientierung der Spiegelfläche über einen initialen Normalenvektor erfolgen, aus der die Position des Reflexes im Raum abgeschätzt werden kann. Alternativ kann die Orientierung der Spiegelfläche aus dem Bild abgeschätzt werden.

Bei dem erfindungsgemäßen Verfahren ist es nicht unbedingt notwendig, dass die Ausrichtung des Reflektors vorher bekannt ist, da beispielsweise über die beschriebene Suchfunktion so lange geflogen werden kann, bis ein Reflex des Markers in dem aufgenommenen Bild erkennbar ist und anschließend die weiteren Verfahrensschritte durchgeführt werden können.

Die erfindungsgemäßen Verfahren ermöglichen in vorteilhafter Weise eine Steuerung einer Flugroute eines Fluggeräts bei einem Überflug über eine Spiegelfläche bereitzustellen, wobei einige Varianten auch eine autonome Regelung der Flugroute ermöglichen.

Wenn eines der erfindungsgemäßen Verfahren zur Steuerung einer Flugroute eines steuerbaren Fluggeräts während einer Vermessung von Spiegelflächen durchgeführt wird, können punktuelle Messwerte, die verteilt über der Spiegelfläche vorliegen, aufgenommen werden, indem das Fluggerät so gesteuert wird, dass Aufnahmen von Reflexen eines Markers an bestimmten Punkten auf der Spiegelfläche ermöglicht werden. Auf diese Weise kann eine Art Abscannen der Spiegeloberfläche erfolgen.

Im Folgenden wird die Erfindung unter Bezugnahme auf die nachfolgenden Figuren näher erläutert. Es zeigen:
- Fig. 1: eine schematische Darstellung des steuerbaren Fluggeräts mit Kamera und des Markers für die erste Variante des erfindungsgemäßen Verfahrens,
- Fig. 2: eine schematische Darstellung des steuerbaren Fluggeräts mit Marker und der Kamera für die zweite Variante des erfindungsgemäßen Verfahrens und
- Fig. 3: eine schematische Darstellung des steuerbaren Fluggeräts mit daran angeordnetem Marker und Kamera für die dritte Variante des erfindungsgemäßen Verfahrens.

Gemäß einer ersten Variante des erfindungsgemäßen Verfahrens wird ein Heliostat 1 mit einem Reflektor 3, der eine Spiegelfläche 5 bildet, von einem steuerbaren Fluggerät 7, an dem Kamera 9 angeordnet ist, überflogen. Ein stationär angeordneter Marker 11, der beispielsweise eine Lichtquelle sein kann, erzeugt einen Reflex 13 auf der Spiegelfläche 5. Die mittels der Kamera 9 aufgenommenen Bilder werden an eine externe Recheneinheit 15 übermittelt und ausgewertet. Anhand der Position des Reflexes 13 des Markers 11 auf der Spiegelfläche 5, der Position des steuerbaren Fluggeräts 7 und der Position des Markers 11 wird ein Navigationsvektor 16 abgeschätzt, der von der abgeschätzten Position des Reflexes des Markers 11 auf der Spiegelfläche 5 hin zur Kamera 9 verläuft.

Der Navigationsvektor 16 wird nun verwendet, um das steuerbare Fluggerät 7 zu einer neuen Position zu steuern. Beispielsweise kann die neue Position des steuerbaren Fluggeräts 7 derart vorgegeben werden, dass der Reflex 13 des Markers 11 auf der Spiegelfläche 5 in Richtung zu dem Mittelpunkt 5a der Spiegelfläche wandert, wir durch den Pfeil 18 angedeutet ist. Dazu wird ein Geschwindigkeitsvektor für das steuerbare Fluggerät 7 vorgegeben, wobei der Geschwindigkeitsvektor in einer Navigationsebene 19, die orthogonal zu dem Navigationsvektor 16 verläuft, Geschwindigkeitsvektorkomponenten 20 aufweist. Die Vorgabe des Geschwindigkeitsvektor ermöglicht eine Umsetzung als Flugbefehl für das Fluggerät 7 auf einfache Art und Weise. Die Lage des Mittelpunkts 5a kann aus den Bildern abgeschätzt werden und die relative Lage des Reflexes 13 zu dem Mittelpunkt 5a kann für die Vorgabe des Geschwindigkeitsvektors beispielsweise in Pixeln bestimmt werden.

Anschließend wird erneut ein Bild der Spiegelfläche 5 des Heliostaten 1 aufgenommen und ausgewertet für eine erneute Abschätzung des Navigationsvektors 16. Diese Schritte werden bis zu einem Abbruchkriterium durchgeführt. Dadurch kann eine autonome Regelung des Flugs des Fluggeräts 7 erfolgen, da über den Reflex 13 des Markers 11 auf der Spiegelfläche eine Rückmeldung erfolgt, ob sich der Reflex 13 zu der gewünschten Position bewegt.

Für die Vorgabe des Geschwindigkeitsvektor kann der Abstand zwischen dem Reflex 13 des Markers 11 auf der Spiegelfläche 5 und dem Mittelpunkt 5a der Spiegelfläche als Pixelabstand in dem aufgenommenen Bild bestimmt werden. Dieser wird dann mit der Länge in Pixeln einer bekannten Struktur in dem Bild, beispielsweise einem Außenrand 21 der Spiegelfläche 5 des Reflektors 3 normiert werden, um einen von der Auflösung des Bildes unabhängigen Abstand zu erhalten.

An der letzten Position des Fluggeräts beispielsweise der Normalenvektor 17 der Spiegelfläche 5 aus der letzten Position des steuerbaren Fluggeräts 7, der Position des Markers 11 sowie der letzten abgeschätzten Position des Reflexes 13 auf der Spiegelfläche 5 bestimmt werden.

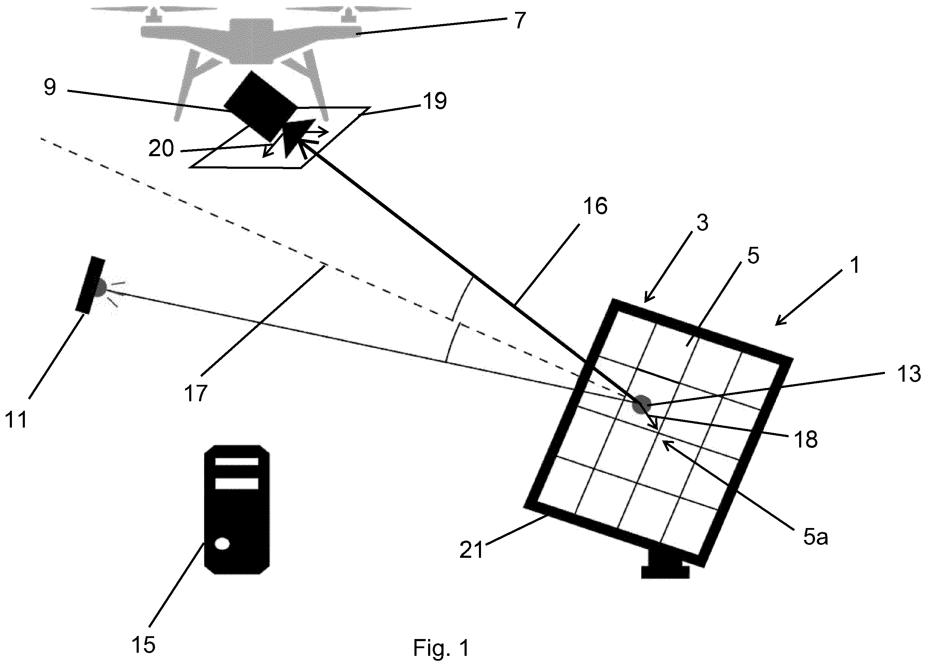

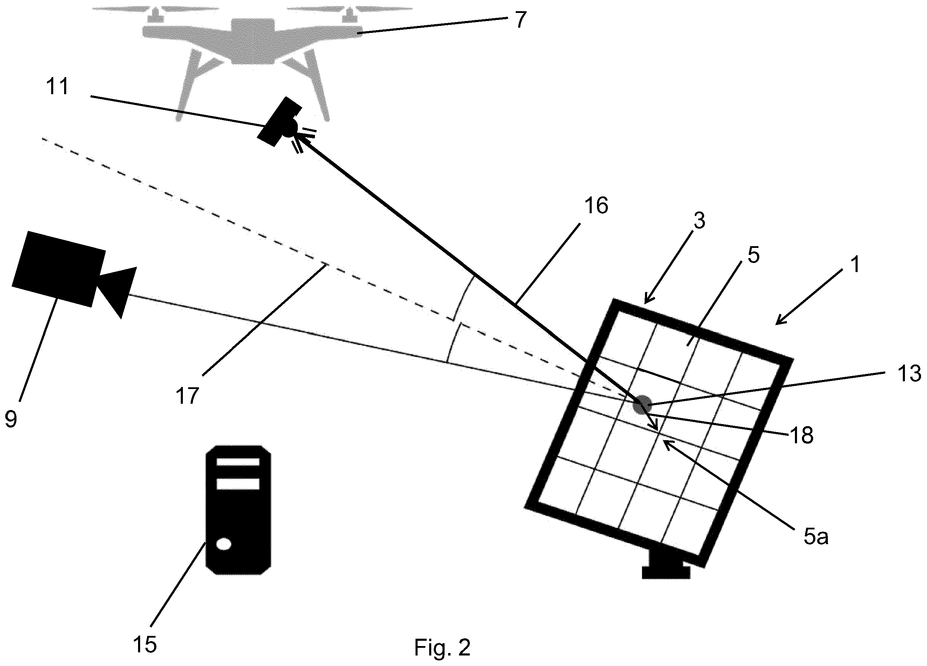

In Fig. 2 ist die zweite Variante des erfindungsgemäßen Verfahrens schematisch dargestellt. Bei der zweiten Variante des erfindungsgemäßen Verfahrens sind Kamera 9 und Marker 11 gegenüber der ersten Variante getauscht sind, sodass die Kamera 9 stationär angeordnet ist wohingegen der Marker 11 an dem steuerbaren Fluggerät 7 befestigt ist. Im Übrigen entspricht die Fig. 2 der Fig. 1 und es wird auf die diesbezügliche Beschreibung verwiesen.

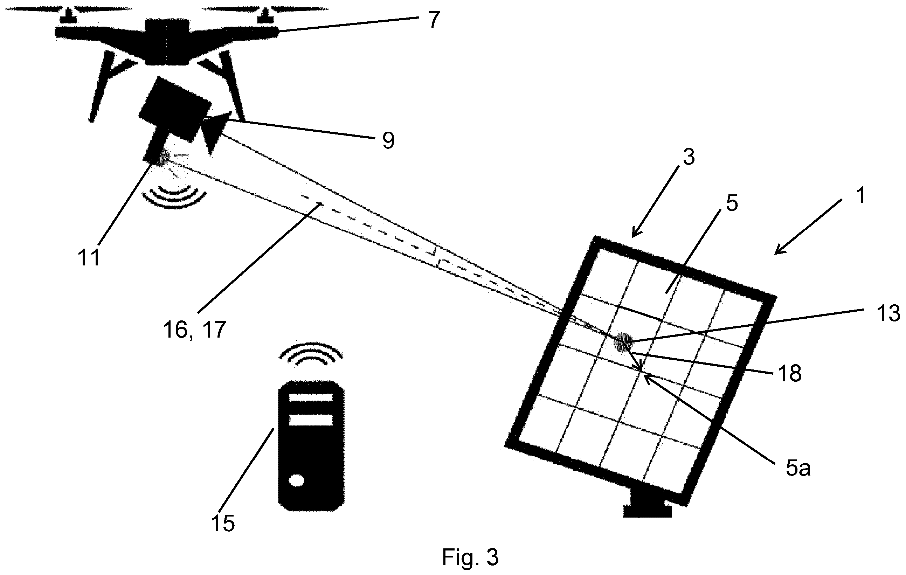

In Fig. 3 ist die Anordnung von Kamera 9 und Marker 11 für eine dritte Variante des erfindungsgemäßen Verfahrens dargestellt.

Bei diesem Ausführungsbeispiel sind sowohl die Kamera 9 als auch der Marker 11 an einer mit einer vorgegebenen Position an dem steuerbaren Fluggerät 7 angeordnet.

Bei der Steuerung des steuerbaren Fluggeräts 7 kann grundsätzlich vorgesehen sein, dass die Steuerung so erfolgt, dass der Reflex 13 des Markers 11 auf der Spiegelfläche 5 in Richtung eines Mittelpunktes 5a der Spiegelfläche 5 "wandert".

### Bezugszeichenliste

- 1: Heliostat
- 3: Reflektor
- 5: Spiegelfläche
- 5a: Mittelpunkt
- 7: steuerbares Fluggerät
- 9: Kamera
- 11: Marker
- 13: Reflex
- 15: externe Recheneinheit
- 16: Navigationsvektor
- 17: Normalenvektor
- 18: Pfeil
- 19: Navigationsebene
- 20: Geschwindigkeitsvektorkomponenten
- 21: Außenrand

## Patentansprüche

1. Verfahren zur Steuerung einer Flugroute eines steuerbaren Fluggeräts (7) bei einem Überflug über eine Spiegelfläche (5) eines Reflektors (3), vorzugsweise eines Reflektors (3) eines Heliostaten (1) eines Solarturmkraftwerks, mit folgenden Schritten:
a) Bereitstellen des steuerbaren Fluggeräts (7), das eine Kamera (9) aufweist, und eines stationären Markers (11) mit vorgegebener Position, der von der Spiegelfläche (5) des Reflektors (3) reflektiert wird,
b) Aufnahme eines Bildes der Spiegelfläche (5) des Reflektors (3) mittels der Kamera (9) an einer Position des steuerbaren Fluggeräts (7) oberhalb des Reflektors (3),
c) Auswerten des Bildes und Bestimmung eines Reflexes (13) des Markers (11) auf der Spiegelfläche (5) in dem Bild,
d) Abschätzen einer Position des Reflexes (13) des Markers (11) auf der Spiegelfläche (5), wobei über die abgeschätzte Position des Reflexes (13) des Markers (11) auf der Spiegelfläche (5) und die Position des steuerbaren Fluggeräts (7) ein Navigationsvektor (16), der von der abgeschätzten Position des Reflexes des Markers (11) auf der Spiegelfläche (5) hin zur Kamera (9) verläuft, abgeschätzt wird, und
e) Steuern des steuerbaren Fluggeräts (7) zu einer neuen Position des steuerbaren Fluggeräts (7) mittels Vorgabe eines Geschwindigkeitsvektors in Richtung zu der neuen Position, wobei der Geschwindigkeitsvektor orthogonal zu dem Navigationsvektor (16) verlaufende Geschwindigkeitsvektorkomponenten (20) aufweist, die in einer Navigationsebene (19) liegen, die orthogonal zu dem Navigationsvektor (16) verläuft, oder mittels Vorgabe eines Wegpunktes an der neuen Position, wobei der vorgegebene Wegpunkt in einer Navigationsebene (19) liegt, die orthogonal zu dem Navigationsvektor (16) verläuft, oder in Bezug auf die Navigationsebene (19) vorgegeben wird.

2. Verfahren zur Steuerung einer Flugroute eines steuerbaren Fluggeräts (7) bei einem Überflug über eine Spiegelfläche (5) eines Reflektors (3), vorzugsweise eines Reflektors (3) eines Heliostaten (1) eines Solarturmkraftwerks, mit folgenden Schritten:
a) Bereitstellen eines steuerbaren Fluggeräts (7), das einen Marker aufweist, und einer stationären Kamera (9) mit vorgegebener Position, die auf die Spiegelfläche (5) des Reflektors (3) gerichtet ist,
b) Aufnahme eines Bildes der Spiegelfläche (5) des Reflektors (3) mittels der Kamera (9), wobei das steuerbare Fluggerät (7) an einer Position oberhalb des Reflektors (3) angeordnet ist,
c) Auswerten des Bildes und Bestimmung eines Reflexes (13) des Markers (11) auf der Spiegelfläche (5) in dem Bild,
d) Abschätzen einer Position des Reflexes (13) des Markers (11) auf der Spiegelfläche (5), wobei über die abgeschätzte Position des Reflexes (13) des Markers (11) auf der Spiegelfläche (5) und die Position des steuerbaren Fluggeräts (7) ein Navigationsvektor (16) der von der abgeschätzten Position des Reflexes des Markers (11) auf der Spiegelfläche (5) hin zum Marker (11) verläuft, abgeschätzt wird,
e) Steuern des steuerbaren Fluggeräts (7) zu einer neuen Position des steuerbaren Fluggeräts (7) mittels Vorgabe eines Geschwindigkeitsvektors in Richtung zu der neuen Position, wobei der Geschwindigkeitsvektor orthogonal zu dem Navigationsvektor (16) verlaufende Geschwindigkeitsvektorkomponenten (20) aufweist, die in einer Navigationsebene (19) liegen, die orthogonal zu dem Navigationsvektor (16) verläuft, oder mittels Vorgabe eines Wegpunktes an der neuen Position, wobei der vorgegebene Wegpunkt in einer Navigationsebene (19) liegt, die orthogonal zu dem Navigationsvektor (16) verläuft oder in Bezug auf die Navigationsebene (19) vorgegeben wird.

3. Verfahren zur Steuerung einer Flugroute eines steuerbaren Fluggeräts (7) bei einem Überflug über eine Spiegelfläche (5) eines Reflektors (3), vorzugsweise eines Reflektors (3) eines Heliostaten (1) eines Solarturmkraftwerks, mit folgenden Schritten:
a) Bereitstellen eines steuerbaren Fluggeräts (7), das eine Kamera (9) und einen Marker (11) aufweist, wobei der Marker und die Kamera (9) jeweils mit einer vorgegebenen Position an dem steuerbaren Fluggerät angeordnet sind,
b) Aufnahme eines Bildes der Spiegelfläche (5) des Reflektors (3) mittels der Kamera (9) an einer Position des steuerbaren Fluggeräts (7) oberhalb des Reflektors (3),
c) Auswerten des Bildes und Bestimmung eines Reflexes (13) des Markers (11) auf der Spiegelfläche (5) in dem Bild,
d) Abschätzen einer Position des Reflexes (13) des Markers (11) auf der Spiegelfläche (5), wobei über die Position des Reflexes (13) des Markers (11) auf der Spiegelfläche (5), und die Position des steuerbaren Fluggeräts (7) ein Navigationsvektor (16), der von der abgeschätzten Position des Reflexes (13) des Markers (11) auf der Spiegelfläche (5) hin zu einem vorgegebenen Punkt an dem Fluggerät (7) verläuft, abgeschätzt wird,
e) Steuern des steuerbaren Fluggeräts (7) zu einer neuen Position des steuerbaren Fluggeräts (7) mittels Vorgabe eines Geschwindigkeitsvektors in Richtung zu der neuen Position, wobei der Geschwindigkeitsvektor orthogonal zu dem Navigationsvektor (16) verlaufende Geschwindigkeitsvektorkomponenten (20) aufweist, die in einer Navigationsebene (19) liegen, die orthogonal zu dem Navigationsvektor (16) verläuft oder, mittels Vorgabe eines Wegpunktes an der neuen Position, wobei der vorgegebene Wegpunkt in einer Navigationsebene (19) liegt, die orthogonal zu dem Navigationsvektor (16) verläuft.

4. Verfahren nach Anspruch 1, 2 oder 3, **gekennzeichnet durch** die Schritte:
f) Aufnahme eines Bildes der Spiegelfläche (5) des Reflektors (3) mittels der Kamera an der neuen Position des steuerbaren Fluggeräts (7) und
g) Wiederholen der Schritte c) bis f) bis zum Erreichen eines Abbruchkriteriums.

5. Verfahren nach einem der Ansprüche 1 bis 4, **dadurch gekennzeichnet, dass** wenn die Auswertung des Bildes in Schritt c) ergibt, dass kein Reflex (13) des Markers (11) in dem Bild erkennbar ist, das steuerbare Fluggerät entlang eines vorgegebenen Flugmusters gesteuert wird mit gleichzeitiger Aufnahme von Bildern mit der Kamera und Auswertung der Bilder bis ein Reflex (13) des Markers (11) in einem Bild bestimmt wird, wobei vorzugsweise dann in Schritt d) dieses Bild verwendet wird.

6. Verfahren nach einem der vorangegangenen Ansprüche, **dadurch gekennzeichnet, dass** das vorgegebene Flugmuster anhand einer vorangegangenen Position oder mehrerer vorangegangenen Positionen oder einer vorangegangenen Flugbahn des steuerbaren Fluggeräts (7) erstellt wird.

7. Verfahren nach einem der vorangegangenen Ansprüche, **dadurch gekennzeichnet, dass** ein Mittelpunkt (5a) der Spiegelfläche (5) oder des Reflektors (3) abgeschätzt wird oder ein Punkt auf der Spiegelfläche (5) vorgegeben wird, wobei die Lage des Reflexes (13) des Markers (11) auf der Spiegelfläche (5) zu dem abgeschätzten Mittelpunkt (5a) oder zu dem Punkt ermittelt wird und bei der Vorgabe des Geschwindigkeitsvektors oder des Wegpunktes berücksichtigt wird.

8. Verfahren nach einem der vorangegangenen Ansprüche, **dadurch gekennzeichnet**, für eine Ermittlung des Geschwindigkeitsvektors oder des vorzugebenden Wegpunktes eine relative Position des Reflexes (13) des Markers (3) auf der Spiegelfläche (5) zu dem Mittelpunkt (5a) der Spiegelfläche (5) oder des Reflektors (3) oder zu einem anderen Punkt in dem aufgenommenen Bild in Pixeln als Pixelabstand bestimmt wird.

9. Verfahren nach Anspruch 8, **dadurch gekennzeichnet, dass** der Pixelabstand normiert wird.

10. Verfahren nach Anspruch 9, **dadurch gekennzeichnet, dass** für die Normierung des Pixelabstands eine Struktur bekannter Länge in dem Bild bestimmt wird, die Pixelanzahl Länge der Struktur bestimmt wird und die bestimmte Pixelanzahl für die Normierung des Pixelabstands verwendet wird.

11. Verfahren nach Anspruch 10, **dadurch gekennzeichnet, dass** als Struktur ein Außenrand der Spiegelfläche (5) oder des Reflektors (3) verwendet wird.

12. Verfahren nach einem der vorangegangenen Ansprüche, **dadurch gekennzeichnet, dass** nach Schritt a) und vor Schritt b) das steuerbare Fluggerät an einer zuvor bestimmten Startposition als Position für Schritt b) positioniert wird.

13. Verfahren nach einem der vorangegangenen Ansprüche, **dadurch gekennzeichnet, dass** wenn in Schritt c) in dem Bild mehrere Reflexe des Markers (11) auf der Spiegelfläche (5) des Reflektors (3) oder mehreren Spiegelflächen (5) des Reflektors (3) bestimmt werden, in Schritt d) die Positionen der mehreren Reflexe des Markers (11) abgeschätzt werden und eine Zusammenfassung der abgeschätzten Positionen erfolgt, wobei anschließend für die Abschätzung des Navigationsvektors (16) die zusammengefasste Position als Position des Reflexes (13) des Markers (11) verwendet wird.
